# EUROPEAN PATENT APPLICATION

(11) **EP 2 040 172 A1**
(43) Date of publication of application: **25.03.2009**
(21) Application number: 07713859.2
(22) Date of filing: 06.02.2007
(51) Int. Cl.: G06F 13/00

(54) **CONTENT LIST DISPLAY DEVICE AND CONTENT LIST DISPLAY METHOD**

(71) Applicant: Panasonic Corporation, Kadoma-shi Osaka 571-8501 (JP)
(72) Inventor: KAWAMURA, Akira Panasonic Corp. IPROC, Osaka-shi, Osaka 540-6207 (JP)
(74) Representative: Grünecker, Kinkeldey, Stockmair & Schwanhäusser Anwaltssozietät
(86) International application number: PCT/JP2007/052030
(87) International publication number: WO 2008/096417

(57) **Abstract**

A content list display apparatus is provided that acquires and displays a content list according to the screen size of a display screen. In this apparatus, a display section (315) has a display screen of a predetermined screen size, and displays a content list. When a user performs an operation and an operation input section (311) outputs a content list transmission request command, a content information operation section (312) commands a display range determining section (313) to determine the content list range. The display range determining section (313) determines the content list range displayable in one screen based on the screen size of the display section (315). By this means, a portable communication terminal apparatus (310) acquires an amount of content list information that can be displayed in one screen from a server apparatus (350), and therefore a short retransmission time is sufficient if retransmission control becomes necessary due to communication impairment, for example, and there is scarcely any possibility of a decline in user convenience.

## Description

### Technical Field

The present invention relates to a content list display apparatus and content list display method.

### Background Art

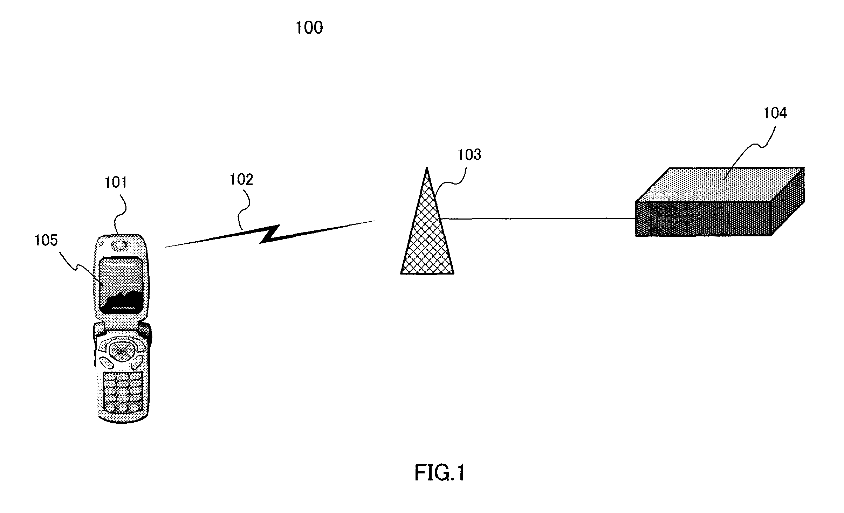

FIG. 1 is a drawing showing a general configuration of a communication system that includes a portable terminal communication apparatus equipped with a content list display apparatus.

As shown in FIG.1, with regard to communication system 100 that includes a portable terminal communication apparatus, a communication system is known in which portable communication terminal apparatus 101 accesses access point 103 by means of Wireless LAN 102, specifies desired content to content server 104 to which access point 103 is connected, obtains a content list of the specified content, and displays the obtained content list.

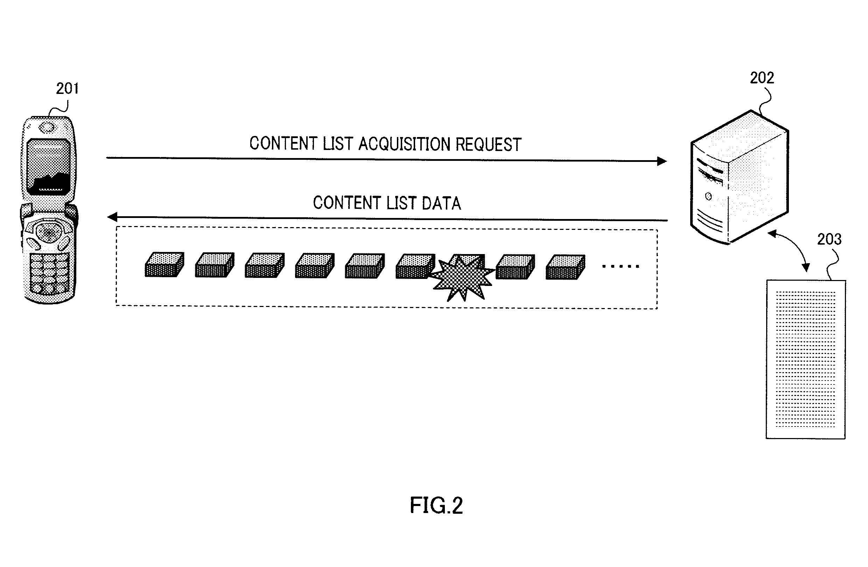

FIG.2 is a schematic diagram for explaining in detail a problem of a known communication system. As shown in FIG. 2, portable communication terminal apparatus 201 sets a predetermined search condition, and makes a request to content server 202 for transmission of content list 203 matching the search condition. In this case, content server 202 transmits content list 203 matching the search condition to portable communication terminal apparatus 201 (see Patent Document 1, for example).
Patent Document 1: Japanese Patent Application Laid-Open No.2006-24196

### Disclosure of Invention

### Problems to be Solved by the Invention

However, in a communication system of Patent Document 1, depending on a set search condition, content list 203 may be of small size comprising several items, but may also be of enormous size comprising hundreds of items. Content list 203 is transmitted as a plurality of IP packets, and therefore if a packet is lost during this transmission due to a problem such as radio interference, for example, content list 203 is retransmitted in accordance with a TCP/IP protocol.

If retransmission becomes necessary for content list 203, there is a problem in that a transmission control delay occurs, acquisition of one content list takes time, and portable communication terminal apparatus 201 user service degrades.

Also, if portable communication terminal apparatus 201 cannot complete acquisition of all the data of content list 203, it cannot perform analysis of the obtained data, and therefore cannot display received content list 203. If the size of content list 203 is very large, it takes time to complete acquisition of content list 203, and there is thus a problem of portable communication terminal apparatus 201 user service degrading.

In addition, if conventional portable communication terminal apparatus 201 receives content list 203 that is too large to be displayed on the display screen of its display section, the whole of received content list 203 cannot be displayed at one time on the display section due to the limitations of the screen size of the display section. That is to say, there is a problem of portable communication terminal apparatus 201 user service degrading, with an increased possibility of a transmission control delay occurring for above-described retransmission, or time being taken to analyze received content list 203, for instance, because portable communication terminal apparatus 201 ignores the screen size of the display section and receives a content list in one go. In this case, there is also a problem of increased memory capacity for storing an acquired content list.

It is an object of the present invention to provide a content list display apparatus and content list control method that enable a content list to be displayed at high speed and also enable memory capacity to be kept small.

### Means for Solving the Problems

A content list display apparatus of the present invention for solving the above problems employs a configuration that has: a display section having a screen that displays a content list; a display range determining section that determines content list display range information that is information indicating the range of a content list displayed on the screen based on a screen size that is the size of the screen; a communication section that receives a content list corresponding to the content list display range information; and a display control section for displaying a content list received by the communication section on the display section.

A content list display method of the present invention has: a display range determining step of determining the range of a content list that is displayable in one screen based on the size of a screen that displays a content list; a requesting step of requesting acquisition of a content list of the determined range; a communication step of receiving a requested content list; and a display control step of displaying a content list received in the communication step.

### Advantageous Effect of the Invention

According to the present invention, a content list display apparatus and content list control method can be provided that enable a content list to be displayed at high speed and also enable memory capacity to be kept small.

### Brief Description of Drawings

FIG.1 is a configuration diagram showing the configuration of a general communication system;
FIG. 2 is a schematic diagram for explaining a problem of a conventional communication system;
FIG.3 is a block diagram showing the configuration of a communication system according to an embodiment of the present invention;
FIG.4 is a sequence diagram showing the operation of a communication system according to an embodiment of the present invention;
FIG.5 is a drawing showing content list display examples;
FIG.6 is a drawing showing content list details; and
FIG.7 is a drawing for explaining a content information storage operation.

### Best Mode for Carrying Out the Invention

An embodiment of the present invention will now be described in detail with reference to the accompanying drawings.

### (Embodiment)

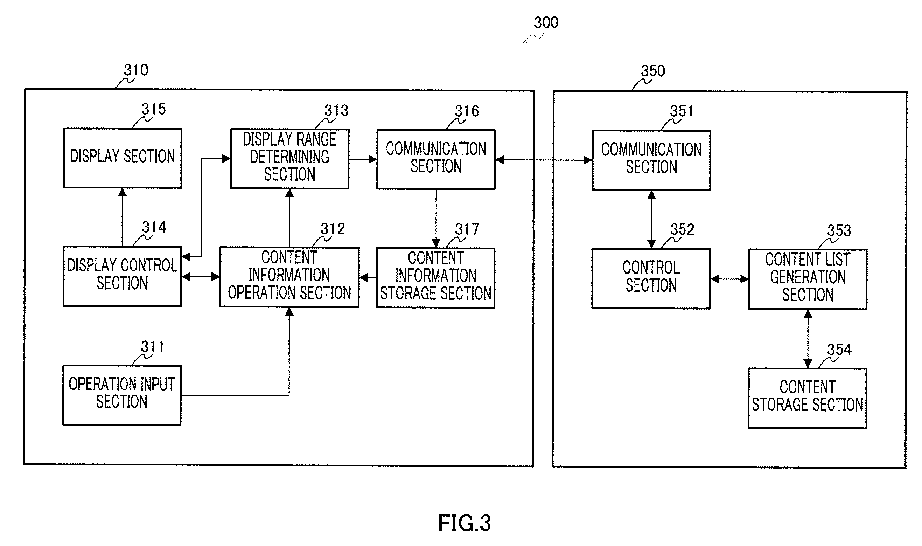

FIG.3 is a drawing showing the configuration of a communication system according to an embodiment of the present invention. In FIG.3, communication system 300 is mainly composed of portable communication terminal apparatus 310 and server apparatus 350.

First, the configuration of portable communication terminal apparatus 310 will be described.

In FIG.3, portable communication terminal apparatus 310 constitutes a content list display apparatus according to an embodiment of the present invention. Portable communication terminal apparatus 310 is mainly composed of operation input section 311, content information operation section 312, display range determining section 313, display control section 314, display section 315, communication section 316, and content information storage section 317.

Operation input section 311 outputs a content list transmission request command to content information operation section 312. Content information operation section 312 outputs a content list display range determination command to display range determining section 313 in accordance with a content list transmission request command from operation input section 311. Display range determining section 313 has the display section 315 display screen size (hereinafter referred to as "screen size") as input from display control section 314 in accordance with determination command output from content information operation section 312, and determines a content list display range according to the screen size. Display control section 314 detects the display section 315 display section screen size and outputs this to display range determining section 313, and also displays a received content list on display section 315 as described later herein. Display section 315 performs control for displaying a content list by means of display control section 314 control.

Communication section 316 makes a request to server apparatus 350 for transmission of a content list corresponding to the display range determined by display range determining section 313. Communication section 316 receives a content list transmitted by server apparatus 350, and outputs this content list to content information storage section 317. Content information storage section 317 sequentially stores content list information output by communication section 316.

Next, the configuration of server apparatus 350 will be described.

Server apparatus 350 is mainly composed of communication section 351, control section 352, content list generation section 353, and content storage section 354.

Communication section 351 outputs a content list acquisition request received from communication section 316 of portable communication terminal apparatus 310 to control section 352, and also transmits a content list input from control section 352 to portable communication terminal apparatus 310 as described later herein. Control section 352 outputs a content list generation command to content list generation section 353 based on a content list acquisition request input from communication section 351. Content list generation section 353 generates a content list showing the contents of content stored by content storage section 354 in accordance with control section 352 control, and outputs this to control section 352. Content storage section 354 stores many content contents.

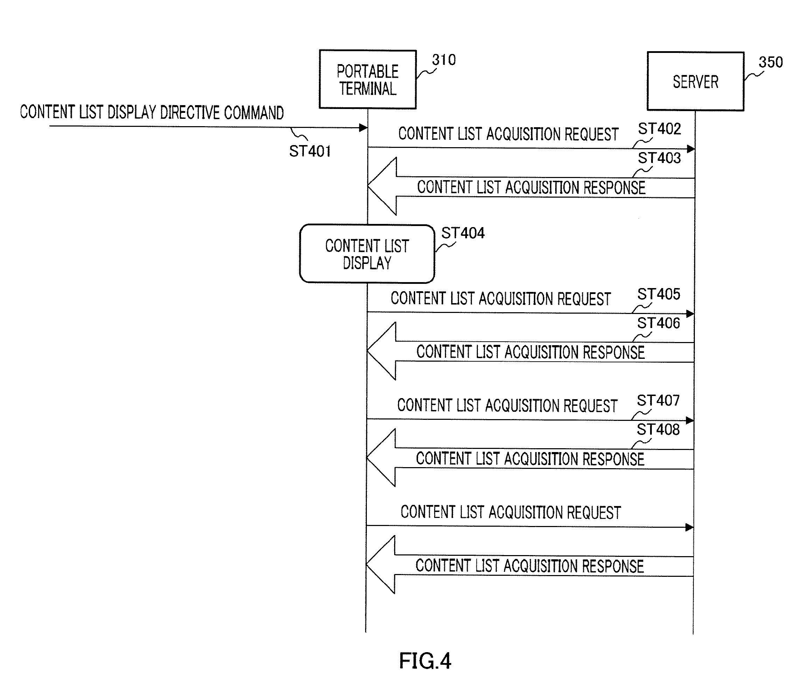

FIG.4 is a sequence diagram showing the operation of communication system 300. The operation of communication system 300 is described below based on FIG. 3 and FIG.4.

Assume that portable communication terminal apparatus 310 user operates operation input section 311, and operation input section 311 outputs a content list display directive command to content information operation section 312 (ST401).

Next, content information operation section 312 issues a command for content list display range determination to display range determining section 313 according to the content list display directive command. Display range determining section 313 has the display section 315 display screen screen-size as input from display control section 314, determines the content list range that can be displayed in one screen of display section 315, and outputs information indicating the determined displayable content list range (hereinafter referred to as "content list display range information") to communication section 316. In this case, a content list is data displayable on display section 315 as an image, data displayable on display section 315 as text, or data displayable on display section 315 simultaneously as image and text.

Next, communication section 316 transmits a content list acquisition request requesting acquisition of a content list of the content list display range information range to server apparatus 350 (ST402).

A content list acquisition request contains the following parameters: Object Id, a parameter indicating identification information that indicates a directory or the like for content list acquisition; StartingIndex, a parameter indicating the starting point of a content list whose acquisition is requested; and RequestCount, a parameter indicating the number of content information items whose acquisition is requested.

The ST402 content list acquisition request is received by server apparatus 350, being received by control section 352 via communication section 351.

Control section 352 issues a command for content list generation to content list generation section 353. Then content list generation section 353 has content list information as input from content storage section 354, generates a content list, and outputs this content list to control section 352.

Next, control section 352 outputs a content list acquisition response to communication section 351. This content list acquisition response contains two parameters: NumberReturned, the number of content information items returned, and TotalMatches, the total number of content items contained in the relevant directory.

Communication section 351 1 then transmits a content list to portable communication terminal apparatus 310 (ST403).

Next, portable communication terminal apparatus 310 displays the received content list (ST404).

Specifically, the received content list is received by communication section 316 and stored in content information storage section 317. Content information storage section 317 outputs the content list to display control section 314 via content information operation section 312.

Display control section 314 outputs the input content list to display section 315, and display section 315 displays the content list.

In this way, display section 315 displays a content list equivalent to one screen of display section 315.

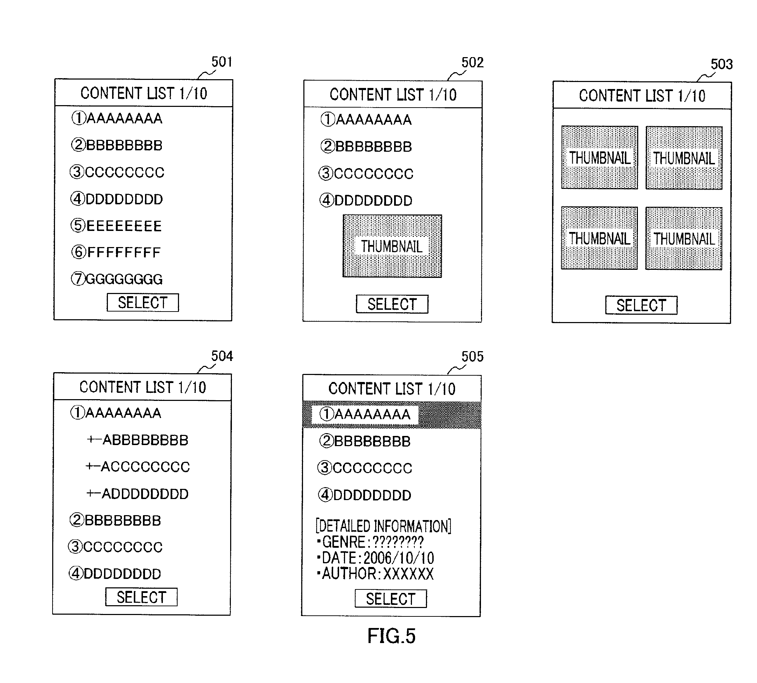

content list display is performed according to variousmodes. FIG.5 is a drawing showing representative examples of display modes. In FIG.5, the example indicated by reference code 501 (hereinafter referred to as "example 501", the same also applying to other examples below) shows a case in which a content list is displayed as text information. Example 502 shows a case in which a content list is displayed as text information and thumbnail information. Example 503 shows a case in which a content list is displayed as a plurality of thumbnail information items. Example 504 shows a case in which a content list is displayed using a directory hierarchical structure. Example 505 shows content list display comprising a small number of text information items, with detailed information displayed for a selected content (shown as "AAAAAAAA" in example 505). Here, thumbnail information means image information scaled down to enable many images to be displayed in list form.

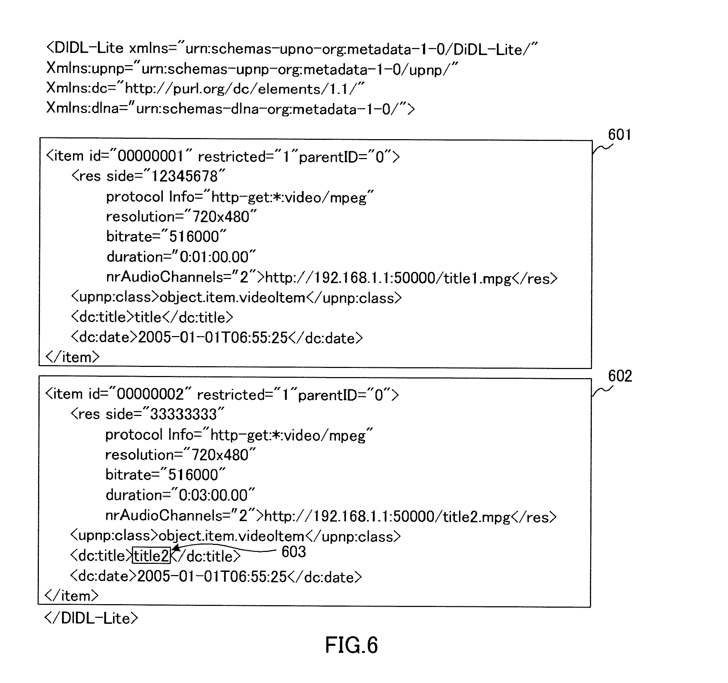

FIG.6 is a drawing showing an example of content list information transmitted to portable communication terminal apparatus 310 by server apparatus 350. In FIG. 6, content list information is written in XML (Extensible Markup Language). Specifically, the content list shown in FIG.6 contains information 601 and 602 related to two content items. The title indicated by reference code 603 (title2) is displayed on display section 315 as text information.

Returning to FIG.4, when display of one screen of a content list (ST404) is completed, display range determining section 313 transmits a content list acquisition request for the next screen to server apparatus 350 via communication section 316 (ST405).
Then server apparatus 350 transmits a content list corresponding to the request transmitted in ST405 to portable communication terminal apparatus 310 (ST406). Communication section 316 receives the corresponding content list and outputs this to content information storage section 317, and content information storage section 317 stores this content list.

Thus, portable communication terminal apparatus 310 performs background operation at the timing at which it performs control for displaying a content list on display section 315, and stores content list information of the next screen after the currently displayed screen in content information storage section 317.

Next, display range determining section 313 transmits a content list acquisition request for the screen before the currently displayed screen to server apparatus 350 (ST407). Server apparatus 350 then transmits content list information corresponding to the request transmitted in ST407 to portable communication terminal apparatus 310 (ST408). In response to this ST408, communication section 316 receives the corresponding content list information and outputs this to content information storage section 317, and content information storage section 317 stores this content list information.

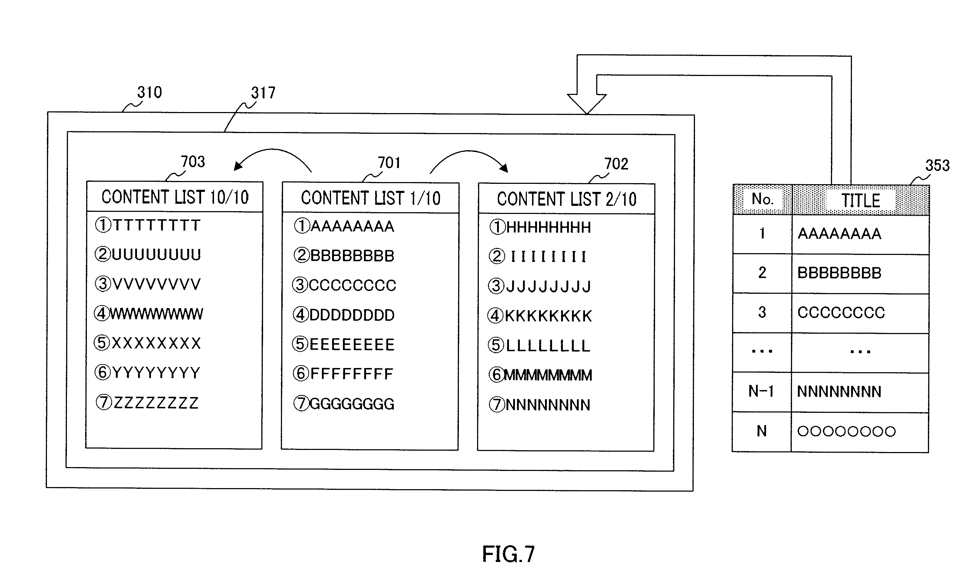

An operation to store content information by means of above-mentioned display range determining section 313 background operation will now be described in detail based on FIG.7. FIG.7 shows how a content list created by content list generation section 353 of server apparatus 350 is stored in content information storage section 317 with the screen size of display section 315 of portable communication terminal apparatus 310 as a unit.

In FIG.7, it is assumed that display section 315 of portable communication terminal apparatus 310 first displays current content list 701. It is also assumed that content list generation section 353 of server apparatus 350 has created a content list for N content items, AAAAAAAA through OOOOOOOO. In this state, as soon as display control section 314 completes display of list 701 of seven consecutive content items denoted by AAAAAAAA through GGGGGGGG, display range determining section 313 transmits a content list acquisition request for the next seven consecutive content items denoted by HHHHHHHH through NNNNNNNN, indicated by reference code 702, to communication section 316. In response to this, server apparatus 350 transmits corresponding content information created by content list generation section 353 to portable communication terminal apparatus 310. Together with this, content information storage section 317 stores content list 702. Next, as soon as acquisition of content list 702 is completed, and automatically, display range determining section 313 transmits an acquisition request for content list 703 with seven consecutive items denoted by TTTTTTTT through ZZZZZZZZ prior to currently displayed current content list 701 to communication section 316, and thereafter content information storage section 317 stores content list 703 by means of the same kind of operation as in the case of content list 702.

Thus, in the background of control to display a currently displayed content list (701 in FIG. 7), portable communication terminal apparatus 310 automatically acquires content lists displayable on the next screen (702 in FIG.7) and the preceding screen (703 in FIG.7) and stores these beforehand in content information storage section 317. In this way, a portable communication terminal apparatus 310 user, when wishing to acquire content list 702 or 703, can display the relevant content list on display section 315 immediately without accessing server apparatus 350. As it is assumed that there will generally be a high probability of a portable communication terminal apparatus 310 user viewing a content list directly preceding or following the currently displayed content list, portable communication terminal apparatus 310 is highly effective in improving user service.

As described above, in content list display by a portable communication terminal apparatus according to this embodiment, a content list can be displayed at high speed and memory capacity can be kept small. That is to say, according to a portable communication terminal apparatus of this embodiment, the size of a content list displayed is determined according to the screen size of the display section, and therefore the amount of content list data does not become unnecessarily large, and when retransmission between portable communication terminal apparatus 310 and server apparatus 350 becomes necessary, retransmission can be completed in a short time.

Also, in content list display by a portable communication terminal apparatus according to this embodiment, content list acquisition is performed in the background, and if content list retransmission becomes necessary due to Wireless LAN radio interference or the like, retransmission can be expected to be completed within the background period in most cases, enabling a user to display a desired content list immediately, and user operability to be improved. This is particularly effective when a content list is generated using thumbnail information (as indicated by reference codes 502 and 503 in FIG.5), which involves a significant increase in content list size compared with a case in which a content list is generated as text information (as indicated by reference code 501 in FIG.5).

### Industrial Applicability

The present invention is suitable for use in a content list display apparatus and content list display method that acquire and display a content list according to the screen size of a display screen.

## Claims

1. A content list display apparatus comprising:
a display section having a screen that displays a content list;
a display range determining section that determines a range of a content list displayable in one said screen based on a size of said screen;
a request section that requests acquisition of a content list of determined said range;
a communication section that receives requested said content list; and
a display control section that displays a content list received by said communication section on said display section.

2. The content list display apparatus according to claim 1, wherein said display range determining section determines a range of said content list displayable as an image in one said screen.

3. The content list display apparatus according to claim 1, wherein said display range determining section determines a range of said content list displayable simultaneously as an image and text in one said screen.

4. The content list display apparatus according to claim 1, wherein:
said request section requests acquisition of a content list consecutive before or after a content list that is displayable in one said screen determined by said display range determining section and is a content list displayable in one said screen; and
said communication section receives said content list consecutive before or after, after receiving a content list that is displayable in one said screen determined by said display range determining section.

5. A content list display method comprising:
a display range determining step of determining a range of a content list that is displayable in one screen based on a size of said screen that displays a content list;
a requesting step of requesting acquisition of a content list of determined said range;
a communication step of receiving requested said content list; and
a display control step of displaying a content list received in said communication step.
